# EUROPEAN PATENT APPLICATION

(11) **EP 4 529 063 A1**
(43) Date of publication of application: **26.03.2025**
(21) Application number: 23198503.7
(22) Date of filing: 20.09.2023
(51) Int. Cl.: H04L 5/00, H04L 1/00, H04L 27/00, H04W 72/23, H04W 72/51, H04L 27/26

(54) **APPARATUS, METHOD AND SYSTEM FOR JOINT COMMUNICATION AND SENSING**

(71) Applicant: Nokia Solutions and Networks Oy, 02610 Espoo (FI)
(72) Inventor: Wild, Thorsten, 70435 Stuttgart (DE); Mandelli, Silvio, 71634 Ludwigsburg (DE)
(74) Representative: Cohausz & Florack

(57) **Abstract**

An apparatus (1300) is disclosed, the apparatus (1300) comprising means (1302) for: assessing whether an uplink transmission from a user equipment to a serving base station is intended for a sensing operation, adapting at least one transmission parameter for the uplink transmission in accordance with the assessment. Also disclosed are a method (1500) comprising: assessing (1502) whether an uplink transmission from a user equipment to a serving base station is intended for a sensing operation, adapting (1504) at least one transmission parameter for the uplink transmission in accordance with the assessment; and a system (100) comprising a user equipment (102) and a serving base station (104), wherein the serving base station(104) is configured for performing a method (1500) according to the present disclosure.

## Description

### TECHNICAL FIELD

The present disclosure relates generally to communication systems and, in particular, to cellular communication systems (such as the 5G-advanced, 6G or future standards). More specifically, the disclosure pertains to so-called joint communication and sensing in such systems and, in particular, to uplink multi-static sensing in such systems. The disclosure inter alia pertains to an apparatus, a method and a system.

### BACKGROUND

Telecommunication systems comprising a serving base station and a supporting base station have been introduced for uplink transmission processing. In some implementations, a user equipment, a serving base station and at least one supporting base station may be configured for uplink (UL) multi-static user equipment (UE)-based sensing.

### SUMMARY

While sensing in so called joint communication and sensing can be enabled by e.g. multiplexing Frequency Modulated Continuous Wave (FMCW) waveforms with communication, orthogonal frequency-division multiplexing (OFDM) radar technology forms an attractive waveform basis for multiplexing communication and sensing signals.

In order to perform sensing with orthogonal frequency-division multiplexing radar techniques, a transmitted signal should be known at the receiver, allowing to equalize out transmitted data and to obtain channel state information (CSI). The CSI may then be used to extract sensing information with known techniques that are not in this document's scope. When using uplink transmission, sensing can be done in two different ways.

On a first hand, sensing can be based using uplink pilot information. As an example, as already known for positioning operation, uplink Sounding Reference Signal (SRS) with adapted configurations can be used for sensing purpose. Channel state information may be obtained by equalizing out a known transmitted SRS from the received signal.

On another hand, sensing may be performed by using both uplink pilot information and uplink data. Even though the transmitted data is not known at the receiver, the received data can be decoded and remodulated. The effect of the known transmitted data can be then equalized out from the received signal for obtaining channel state information.

The present disclosure focuses on the latter option, wherein it is desirable to enable efficient uplink multi-static sensing operation in data channels. In particular, it is desirable to allow at least one sensing receiver to obtain the transmitted data signal and /or data symbol and their respective mapping in the frame structure without severe impacts on hardware requirements and on signaling overhead. Overall, it is desirable to optimize uplink data channels procedures and/or operations for enhancing sensing performance.

It is to be noticed that certain embodiments of the disclosure may have the effect of enabling the UE to efficiently inform the network about the outcome of a position estimate, such as a GNSS position estimate. Certain embodiments may have the technical effect of reducing or minimizing the network signaling overhead and energy consumption at the UE.

In a first example aspect, there is disclosed an apparatus comprising means for: assessing whether an uplink transmission from a user equipment to a serving base station is intended for a sensing operation, adapting at least one transmission parameter for the uplink transmission in accordance with the assessment.

In a second example aspect, there is disclosed a method comprising assessing whether an uplink transmission from a user equipment to a serving base station is intended for a sensing operation, adapting at least one transmission parameter for the uplink transmission in accordance with the assessment.

In a third example aspect, there is disclosed a system comprising a user equipment and a serving base station, wherein the serving base station is configured for performing a method according to the present disclosure.

The aspects disclosed therein allow for optimizing uplink transmission for enhanced sensing performance, in particular allow for using uplink transmission emitted in a cellular system for joint communication and sensing operations.

The apparatus of the first aspect may be a base station, in particular a serving base station serving a user equipment, a network entity in a cellular network, or a user equipment.

Assessing whether an uplink transmission from a user equipment to a serving base station is intended for a sensing operation may comprise at least the following: receiving information on a use for the uplink transmission, determining whether the received information on a use for the uplink transmission comprises a use for sensing operation. The information on a use for the uplink transmission may be received from, e.g., a sensing management function. Alternatively or additionally, the information on a use for the uplink transmission may be received as part of a scheduling grant for the uplink transmission, as sensing support information, or as part of the uplink transmission itself.

The intended sensing operation may be performed on the basis of pilot information of the uplink transmission, on data of the uplink transmission, or on the basis of a combination of the pilot information and of the data of the uplink transmission.

Adapting at least one transmission parameter for the uplink transmission in accordance with the assessment may comprise comparing a value for the at least one transmission parameter with at least one predetermined reference value, changing, in particular increase, decrease, or keeping unchanged, the value for the at least one transmission parameter according to the comparison result. The at least one predetermined reference value may be stored in a memory and be allocated to a type of transmission parameter. The at least one predetermined reference value may be predetermined as value with a tolerance range, or as an extremum of a tolerance range for a type of transmission parameter.

At the difference to positioning operation, wherein the position of a user equipment or of an entity of a telecommunication network is determined, sensing operation allow for determining information on objects of the environment of a user equipment or entity of the telecommunication network, wherein the objects are no part of the telecommunication network itself, and are no transmitter or receivers. Sensing operation allow yielding spatial knowledge of the physical surroundings, in particular spatial knowledge of the surrounding of a user equipment and / or of at least one base station. The inclusion of sensing capabilities in a communication network may be used for improving the performance of the network itself. Spatial sensing may be offered as a service to users or applications that are external to the network.

Any of the disclosed device (apparatus, network entity) may generally be a stationary device or a mobile device. The apparatus may in particular be a terminal device such as a user equipment, e.g. mobile device, such as a smartphone, a tablet, a wearable, a smartwatch, a low power device, an IoT device, an IIoT device, a vehicle, a truck, a drone, an airplane, or the like. The apparatus may in particular be a LPWAN device, a NB-IoT device or an eMTC device. The apparatus may in particular be capable of communicating with (transmitting and receiving signals and/or data to/from) a network or a network device, such as a base station of a communication network. The apparatus may at least be able to communicate with a non-terrestrial network or non-terrestrial network entity, for instance with a satellite. Nevertheless, the apparatus may still be able to communicate with terrestrial network entities.

A network entity may be understood as a wireless communication station installed at a fixed or mobile location and may in particular be or comprise an entity of the radio access network of the communication system. For instance, the network device may be, comprise, or be part of a base station of a communication network of any generation (e.g. a gNB, eNodeB, NodeB, BTS or the like) of 3GPP standard. However, the network entity may also be or serve as a relay station (such as a mobile relay satellite communicating with a fixed terrestrial base station, either of which may be considered a network entity according to the disclosure). The network entity may be implemented in or communicate with a non-terrestrial entity, such as a satellite. In an example of a 5G network, the non-terrestrial network entity (such as a satellite) may also comprise a gNB-DU, while the gNB-CU is implemented in a terrestrial base station. Generally, the network entity may be or comprise a hardware or software component implementing a certain functionality. In an example, the network entity may be an entity as defined by 3GPP 5G or NR standard (also referred to as gNB). Accordingly, while the network entity may be understood to be implemented in or be a single device or module, the network entity may also be implemented across or comprise multiple devices or modules. As such, the network entity may in particular be implemented in a satellite or be a stationary device utilizing a satellite for communication with a UE. Multiple network entities of the exemplary aspect may in particular establish a communication system or network, which may in particular be a New Radio (NR) or 5G system (5GS) or part thereof or any other mobile communications system defined by a past or future standard, in particular successors of the present 3GPP standards. The network device of the exemplary aspects may be capable of being in direct and/or indirect communication with the exemplary apparatus of the first aspect.

The means or functionality of any of the disclosed apparatuses or network entities can be implemented in hardware and/or software. They may comprise one or multiple modules or units providing the respective functionality. They may for instance comprise at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

Thus, according to the respective exemplary aspects of the present disclosure, there is in each case also disclosed a respective apparatus or network entity comprising at least one processor and at least one memory including computer program code, the at least one memory and the computer program code configured to, with the at least one processor, cause an apparatus at least to perform a method according to the respective aspect of the present disclosure.

Any of the above-disclosed exemplary aspects may, however, in general be performed by an apparatus, which may be a module or a component for a device, for example a chip. The disclosed apparatus may comprise the disclosed components, for instance means, processor, memory, or may further comprise one or more additional components.

According to the exemplary aspects of the present disclosure, there is in each case also disclosed a computer program, the computer program when executed by a processor of an apparatus causing said apparatus to perform a method according to the respective aspect.

The computer program may in each case be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

In an exemplary embodiment, the at least one transmission parameter is or pertains to one or more of: a frequency allocation, a modulation order, MO, a code rate, a modulation and coding scheme, MCS, a cyclic prefix, CP, length.

In contrast of small Physical Resource Block, PRB, frequency allocations for uplink communications, for the purpose of data-aided sensing it is advantageous that uplink data transmissions can use also non-contiguous allocations for wider overall bandwidths which will improve the sensing range resolution. Adapting one or more of the above named transmission parameters, such improving can be achieved without impacting communications performance, thus improving the overall performance for joint communication and sensing operations.

As an example, modulation order, MO, can be downgraded, e.g. down to 2, in order to reduce power fluctuations in the OFDM frame, therefore allowing a better performance of data equalization. In particular, by lowering a modulation order, MO, and lowering code rate, the required amount of allocated Physical Resource Blocks, PRB, will be stretched, thus allowing for a larger sensing bandwidth.

A Cyclix Prefix, CP, length may be increased for supporting an intended sensing operation, allowing, e.g., to remove or reduce inter-symbol interference at higher ranges.

In an exemplary embodiment, the at least one transmission parameter pertains to a frequency allocation, and adapting at least one transmission parameter for the uplink transmission in accordance with an assessment that the uplink transmission is intended for a sensing operation comprises one or more of: increasing the bandwidth for the uplink transmission; prioritizing an allocation of higher bandwidths for the uplink transmission; using a bandwidth for the uplink transmission according to or higher than a predefined bandwidth; or using a bandwidth for the uplink transmission higher than a bandwidth that would be used for an uplink transmission assessed as not being intended for a sensing operation.

This allows for achieving a large bandwidth for the uplink transmission with adapted transmission parameters, thus enhancing range resolution performance of a sensing operation performed on the basis of the uplink transmission with adapted transmission parameters.

In particular, adapting at least one transmission parameter for the uplink transmission in accordance with an assessment that the uplink transmission is intended for a sensing operation may comprise using a bandwidth for the uplink transmission according to or higher than a minimum bandwidth value for performing transmitting the uplink transmission with a targeted quality of signal, QoS, wherein the minimum bandwidth value is at most 100 MHz, in particular at most 50 MHz, more particularly at most 20 MHz.

In an exemplary embodiment, the bandwidth for the uplink transmission is increased by one or more of a reduction of the modulation order and/or coding scheme so that more frequency resources are occupied by the uplink transmission; using minislots for the uplink transmission so as to concentrate the uplink transmission of individual UE on less time symbols and occupying more frequency resources; aggregating transmissions among multiple carriers; or making use of multiple uplink allocations for multiple user equipments.

With reduction of the modulation order and/or coding scheme so that more frequency resources are occupied by the uplink transmission, uplink transmissions from multiple UEs are used for effectively increasing the bandwidth. By doing so, the uplink transmission from a single source, e.g. user equipment, is extended in frequency for achieving better sensing performance with respect to e.g. sensing range resolution. This may come at the price of reduced fairness in allocation of the multiple user equipments; in other words, the user equipments get more resources every time they are scheduled. However, the user equipments are scheduled less often, so each one of the multiple user equipment get, in average, similar resources).

In particular, it may be considered to reduce the modulation order, MO, thus reducing power fluctuations across different resource elements. When choosing the modulation order, MO, with a value of 2, the power across different resource elements may be brought to be constant or at least nearly constant.

In an exemplary embodiment, the at least one transmission parameter pertains to a modulation order, and adapting at least one transmission parameter for the uplink transmission in accordance with an assessment that the uplink transmission is intended for a sensing operation comprises one or more of: decreasing a modulation order for the uplink transmission; prioritizing a lower modulation order for the uplink transmission; setting a modulation order for the uplink transmission to or lower than a predefined modulation order; or setting a modulation order for the uplink transmission to a lower modulation order than a modulation order that would be set for an uplink transmission assessed as not being intended for a sensing operation.

This allows for link adaptation, in particular for adapting modulation and coding scheme, MCS, or modulation order, MO, and code rate, at which the uplink transmission may be used for sensing operation, while keeping acceptable spectral efficiency for communication operation.

In the framework of a codebook of each symbol transmitted with the uplink transmission, the modulation order, MO, indicates how many coded bits are transmitted per symbol in a 2^{M}- QAM alphabet, wherein M is a value for modulation order, MO. For high channel quality, a relatively high modulation order, MO, e.g. up to 8 in current standards, may be used. For low quality channel, a modulation order, MO, of at least 2, may be used, corresponding to a constant amplitude Quadrature Phase Shift Keying, QPSK, modulation.

For sensing operations, but in general for any channel estimation task, it is desirable that the transmitted pilots are substantially of constant amplitude to achieve the best performance possible. Therefore, for an uplink transmission that is intended for use in a sensing operation, lower the modulation order, MO, for the uplink transmission allows for achieving enhanced sensing performance.

A lower modulation and coding scheme, MCS, may result in higher resource usage and the higher resource usage can result in higher bandwidth used which again increases sensing performance w.r.t. range resolution, thus lowering the modulation and coding scheme, MCS, may not be performed it if the load is high. However, adapting the modulation and coding scheme, MCS, may be managed on the basis of a prioritization between communication performance and sensing performance.

In an exemplary embodiment, the at least one transmission parameter pertains to a cyclic prefix length and wherein adapting at least one transmission parameter for the uplink transmission in accordance with an assessment that the uplink transmission is intended for a sensing operation comprises one or more of: increasing a cyclic prefix length for the uplink transmission; prioritizing a longer cyclic prefix for the uplink transmission; setting a cyclic prefix length for the uplink transmission to or higher than a predefined cyclic prefix length; or setting a cyclic prefix length for the uplink transmission to a longer cyclic prefix than a cyclic prefix length that would be set for an uplink transmission assessed as not being intended for a sensing operation.

The uplink transmission with transmission parameter adapted accordingly may support longer ranges, thus facilitating sensing operation.

The cyclic prefix, CP, length may determine a trade-off between inter-symbol interference due to long channel paths and efficiency. Shorter cyclic prefix, CP, length may have higher efficiency, and support smaller ranges, while longer cyclic prefix, CP, length may have lower efficiency and support larger ranges. In case of sensing operations, it may be desirable to support relatively long ranges.

In an exemplary embodiment, the apparatus further comprises means for: transmitting, to the user equipment, a scheduling grant for the uplink transmission, wherein the scheduling grant comprises information on the at least one adapted transmission parameter.

In an exemplary embodiment, the method further comprises: transmitting, to the user equipment, a scheduling grant for the uplink transmission, wherein the scheduling grant comprises information on the at least one adapted transmission parameter.

Assessing whether an uplink transmission from a user equipment to a serving base station is intended for a sensing operation, and adapting at least one transmission parameter for the uplink transmission in accordance with the assessment may be performed before transmitting, to the user equipment, a scheduling grant for the uplink transmission.

In an exemplary embodiment, the apparatus further comprises means for: receiving, from the user equipment, an uplink transmission in accordance with the scheduling grant; determining sensing information based on the received uplink transmission.

In an exemplary embodiment, the method further comprises: receiving, from the user equipment, an uplink transmission in accordance with the scheduling grant; determining sensing information based on the received uplink transmission.

The received uplink transmission may be provided with at least one transmission parameter, wherein the at least one transmission parameter is adapted in accordance with the assessment whether the uplink transmission from a user equipment to a serving base station is intended for a sensing operation. Accordingly, determining sensing information may be performed with enhanced sensing performance.

The apparatus may thus be able to, on the one side, adapt the at least one transmission parameter of the uplink transmission when the uplink transmission is intended for sensing operation, and, on the other hand, determining sensing information based on the basis of the uplink transmission with the at least one adapted transmission parameter. Accordingly, the apparatus may be able to perform an adaptation that is optimized for its own means, in particular optimized for a specific method step of or specific algorithm for determination of sensing information.

In an exemplary embodiment, the apparatus further comprises means for: transmitting, to at least one supporting base station, sensing support information associated with the scheduling grant.

In an exemplary embodiment, the method further comprises: transmitting, to at least one supporting base station, sensing support information associated with the scheduling grant.

A supporting base station as disclosed therein may, at the difference to a serving base station, not be configured or aimed to serve a user equipment. In particular, a supporting base station may not be connected in a control-plane connection with the user equipment that the serving base station serves.

Sensing supporting information may be information enabling and / or allowing a supporting base station to receive an uplink transmission, to receive information on scheduling grant for an uplink transmission, to receive uplink data, to store a received uplink transmission, to fetch an uplink transmission from an own ring buffer memory, to transmit determined sensing information to a sensing management function.

In an exemplary embodiment of either the serving base station, the supporting base station or the sensing management function, means for determining sensing information based on the received uplink transmission are provided.

In an exemplary embodiment, the sensing support information comprises at least one of a request for the at least one supporting base station to support the serving base station or supporting control information. Using a request for the at least one supporting base station to support the serving base station as support sensing information enables a connection of the serving base station with a base station that fulfils predefined criterion and is an appropriate candidate for supporting the serving base station. Example of such criterion may be a geographical position, a location relative to the user equipment and / or to the serving base station. Supporting control information may enable the supporting base station to perform sensing operation on the basis of the received uplink transmission. In particular, the supporting control information may comprise pilot information that have been used by the serving base station for ordering the emission of the uplink transmission by the user equipment. This allows obtaining a channel state information (CSI) by processing the uplink transmission in a OFDM operation at the supporting base station.

In an exemplary embodiment, the sensing support information comprises at least one of: a resource element, RE, map of the uplink transmission, information on a resource allocation of the uplink transmission; physical resource block, PRB, map of the uplink transmission, information on a physical resource block allocation of the uplink transmission; information on a reference signal of the uplink transmission, information on a demodulation reference signal, DMRS, of the uplink transmission, information on a sounding reference signal, SRS, of the uplink transmission; information on a modulation and coding scheme, MCS, of the uplink transmission; information on a scrambling of the uplink transmission; information on a position of the user equipment, information on a geographical location of the user equipment, information on a geographical location of the user equipment relative to an entity of the telecommunication network the user equipment is part of; an angle of arrival, AoA, of the uplink transmission. Such sensing support information may enable the at least one supporting base station to perform sensing operation with increased reliability and precision. In particular, providing a supporting base station with a plurality of parameters as listed herein may allow for mapping of data symbols from the received transmission with increase accuracy, and, at the same time, keep hardware requirements low at the supporting base station for performing sensing operation.

The angle of arrival may be an angle of arrival that the uplink transmission to be sent by the user equipment shall have when arriving at the serving base station. Alternatively or additionally, the sensing support information may comprise an angle of arrival that the uplink transmission to be sent by the user equipment shall have when arriving at the supporting base station. An example for an angle of arrival comprised by the sensing support information may be an angle of arrival to be used for receiving the uplink transmission sent by the user equipment according to the scheduling grant.

In an exemplary embodiment, the sensing support information comprises a plurality of angle of arrival, AoA, of the uplink transmission, the plurality of angle of arrival, AoA, of the uplink transmission comprising at least one of: an angle of arrival for a line of sight (LOS) propagation of the uplink transmission at the serving base station; an angle of arrival for a non-line of sight (NLOS) propagation of the uplink transmission at the serving base station. An angle of arrival for LOS propagation may be used as a reference for impairment correction. An angle of arrival for NLOS propagation may correspond to the angle of arrival an uplink transmission has at the serving or supporting base station after being reflected at or more generally after interacting with or being affected by one or more the physical element(s) positioned in the trajectory of the transmission. Thus, an angle arrival for NLOS propagation may be of interest for searching such physical element(s) within the physical environment of the user equipment.

In an exemplary embodiment, the sensing support information comprises at least one of: a resource element, RE, map of the uplink transmission; physical resource block, PRB, map of the uplink transmission; information on a demodulation reference signal, DMRS, of the uplink transmission; information on a modulation and coding scheme, MCS, of the uplink transmission; information on a position of the user equipment; a relative angle of arrival, AoA, of the uplink transmission.

In an exemplary embodiment, the system further comprises a supporting base station.

In an exemplary embodiment t, there is disclosed a serving base station, serving a user equipment, comprising means for: transmitting, to the user equipment, a scheduling grant for an uplink transmission; transmitting, to at least one supporting base station, sensing support information associated with the scheduling grant; receiving, from the user equipment, an uplink transmission in accordance with the scheduling grant.

In an exemplary embodiment, there is disclosed a method, performed by a serving base station, the method comprising: transmitting, to the user equipment, a scheduling grant for an uplink transmission; transmitting, to at least one supporting base station, sensing support information associated with the scheduling grant; receiving, from the user equipment, an uplink transmission in accordance with the scheduling grant.

In an exemplary embodiment, there is disclosed a supporting base station, supporting a serving base station serving a user equipment in a sensing operation, comprising means for: receiving, from the serving base station, sensing support information associated with a scheduling grant, wherein the scheduling grant concerns an uplink transmission sent by the user equipment and intended for the serving base station; receiving, based on the sensing support information, the uplink transmission from the user equipment.

In an exemplary embodiment, there is disclosed a method, performed by a supporting base station, the method comprising: receiving, from the serving base station, sensing support information associated with a scheduling grant, wherein the scheduling grant concerns an uplink transmission sent by the user equipment and intended for the serving base station; receiving, based on the sensing support information, the uplink transmission from the user equipment.

In an exemplary embodiment, there is disclosed a sensing management function comprising means for: receiving, from at least one base station positioned within a sensing area cell, measurement information on at least one of: a level of transmission power, a location of the at least one base station, an orientation of at least one base station relative to at least one further, an area covering by at least one of the at least one base station; comparing the measurement information received from the at least one base station with a predefined threshold value, determine, in dependence on the comparison result, if the at least one base station is a candidate as supporting base station for a serving base station serving a user equipment located within the sensing area cell, if the at least one base station is determined as candidate as supporting base station, transmitting information on the at least one base station which is determined as candidate as supporting base station to the serving based station serving the user equipment located within the sensing area cell.

In an exemplary embodiment, there is disclosed a network entity comprising means for performing a sensing management function.

In an exemplary embodiment, there is disclosed a system comprising at least one user equipment, at least one serving base station and at least one supporting base station.

According to each of the exemplary embodiments, a respective method is also disclosed.

The exemplary embodiments disclosed therein allow providing a receiving sensing entity or a plurality of receiving sensing entities, e.g. a next generation node B, or next generation node B transmission and reception point, gNB's TRP, with transmitted uplink signal and / or symbol and their respective mapping into the frame structure for sensing operation.

In an exemplary embodiment, the serving base station further comprises means for processing the uplink transmission received from the user equipment to obtain uplink data; and transmitting, to the at least one supporting base station, the uplink data. Processing the uplink transmission received from the user equipment to obtain uplink data may be performed by means of the processor, the memory and the computer program saved therein. Uplink data obtained by the serving base station and provided to the supporting base station allows the supporting base station to perform sensing operation even when a signal-to-ratio value of the uplink transmission received at the supporting base station is not sufficient. A SNR may for instance be considered not sufficient, when the SNR is below a threshold value. The threshold value may for instance be dynamically determined or predetermined. Transmitting, to the at least one supporting base station, the uplink data, may be performed by the communication unit of the serving base station, said communication unit being configured accordingly.

In an exemplary embodiment, determining sensing information based on the received uplink transmission comprises estimating channel state information based on at least one of: pilot signaling; or uplink data of the uplink transmission. Using pilot information or pilot signaling allows for performing estimating channel state information based on reference signals or pilot information that are already known from other operations such as communication of positioning. When taking both pilot signaling and uplink data of the uplink transmission into account for estimation of channel state information, the SNR on the channel state information estimation is increased, thus enhancing the accuracy of the estimation can be increased. In particular, taking uplink data covering a larger frequency and time domains as pilot signaling may contribute to enhance significantly the SNR on the channel state in formation, thus allowing for higher quality of later sensing operation based on the estimated CSI.

In an exemplary embodiment, determining sensing information based on the received uplink transmission comprises estimating a quality of the estimated channel state information based on the pilot signaling of the uplink transmission and comparing the estimated quality to a threshold quality, and if the comparison results in that the estimated quality is equal or lower than the threshold quality, estimating channel state information based on uplink data of the uplink transmission. The quality of the estimated channel state information may be expressed as signal-to-noise ratio value. Estimating a quality of the estimated channel state information and reacting correspondingly by using uplink data additionally to pilot information for a re-estimation of the channel state information if needed allows for improving the overall quality of the channel state information, thus enabling later processing of the obtained channel state information with increased accuracy and performance, e.g. better range, in particular for sensing operation. Requirement to the estimated channel state information may be different for sensing operation purposes than when using channel state information for communication or positioning purposes.

In an exemplary embodiment, the serving base station further comprises means for transmitting the determined sensing information to a sensing management function. Accordingly, the sensing management function may further process the sensing information for determining characteristics of the environment of the user equipment that transmitted the uplink transmission. Transmitting the determined sensing information to a sensing management function may be performed by the communication unit of the serving base station, said communication unit being configured accordingly.

In an exemplary embodiment, the serving base station further comprises means for receiving, from a sensing management function, at least one of sensing management information; information about at least one potential supporting base station; or a request for a resource pre-allocation for sensing operation. Accordingly, the serving base station is provided with information that allows for requesting support at base stations that have been estimated as eligible by the sensing management function, thus increasing the probability of success of a connection of the serving base station with the requested base station. Receiving, from a sensing management function, at least one of sensing management information; information about at least one potential supporting base station; or a request for a resource pre-allocation for sensing operation may be performed by the communication unit of the serving base station, said communication unit being configured accordingly.

In an exemplary embodiment of the serving base station, the means for transmitting, to at least one supporting base station, sensing support information, is adapted for an information transfer via Xn or is adapted for information transfer via a sensing management function, e.g. via NRPPa or evolution thereof.

In an exemplary embodiment of the supporting base station, the means for receiving, from the serving base station, sensing support information, is adapted for an information transfer via Xn or is adapted for information transfer via a sensing management function, e.g. via NRPPa or evolution thereof.

In an exemplary embodiment, the sensing management function comprises means for transferring information via a sensing management function, e.g. via NRPPa or evolution thereof, with the serving base station and the at least one supporting base station.

In an exemplary embodiment, the sensing management information comprises at least one of: information on a quality of service required for a subsequent sensing operation; information on a required high-level resource allocation at the serving base station; wherein the information about potential supporting base station comprises at least one of: a receiving threshold derived from a select function of the sensing management information; a number of supporting base stations derived from a select function of the sensing management information; information on a supporting base station determined by the sensing management function; information on a base station set as supporting base station by the sensing management function.

Sensing management information may contribute to improve a distribution of resources or allocation within the telecommunication network, in particular over a plurality of supporting base stations.

In an exemplary embodiment, the supporting base station further comprises means for receiving, from the serving base station, uplink data obtained by the serving station from processing the uplink transmission between the user equipment and the serving base station, wherein determining sensing information based on the received sensing-support information and based on the received uplink transmission is further based on the uplink data received from the serving base station. Uplink data obtained by the serving base station and received at the supporting base station allows the supporting base station to perform sensing operation even when a signal-to-ratio value of the uplink transmission received at the supporting base station is not sufficient. Receiving, from the serving base station, uplink data obtained by the serving station from processing the uplink transmission between the user equipment and the serving base station, may be performed by the communication unit of the supporting base station, said communication unit being configured accordingly.

In an exemplary embodiment, the supporting base station further comprises means for storing the received uplink transmission in accordance with the sensing support information. Thus, an uplink transmission may be received at the supporting base station at a first point in time and saved for later processing. In particular, this allows for saving the uplink transmission at least until uplink data processed by the serving base station is received at the supporting base station at a second point in time, said second point in time being later than the first point in time. As a result, a processing taking both the uplink transmission received from the user equipment and the uplink data received from the serving base station can be used for a processing of the uplink transmission, in particular in a sensing operation for obtaining a channel state information (CSI). Storing the received uplink transmission may be performed by the memory of the supporting base station. Accordingly, the sensing supporting information may be transmitted from the serving base station to the supporting base station after the user equipment transmitted the uplink transmission. This may ease coordinating transmission at the serving base station, in particular when the serving base station transmits decoded uplink data and sensing supporting information jointly.

In an exemplary embodiment, the supporting base station further comprises means for continuously buffering received uplink transmissions in a ring buffer memory, wherein the continuous buffering comprises buffering the uplink transmission received from the user equipment; and fetching, based on the sensing support in formation, the uplink transmission received from the user equipment from the ring buffer memory.

In an exemplary embodiment, the supporting base station further comprises means for transmitting the determined sensing information to a sensing management function. This allows a processing of the sensing information at the sensing management function. In particular, when sensing information are transmitted to the sensing management function by a plurality of base stations, the accuracy of the processing results can be increased, e.g. by aggregating the transmitted sensing information. Transmitting the determined sensing information to a sensing management function may be performed by the communication unit of the supporting base station, said communication unit being configured accordingly.

In an exemplary embodiment, the sensing management function further comprises means for receiving, from a serving base station serving a user equipment, first sensing information, and receiving, from at least one supporting base station supporting the serving base station, at least second sensing information, aggregating the first sensing information with the at least one second sensing information. Accordingly, the sensing management function can collect sensing information from ma plurality of entities or base stations, and aggregate the collected sensing information for further processing for sensing operations. In particular, the sensing management function may be used for centralized processing of sensing information produced at a plurality of entities within a telecommunication network.

In an exemplary embodiment, the sensing management function further comprises means for: transmitting, to at least one of the serving base station or the at least one supporting base station, a request for resource pre-allocation for a data aided sensing operation. This example of sensing management function is then configured for coordinating resources of at least one base station or a system with a serving base station and at least one supporting base station for enhanced performance.

In an example, the system disclosed therein further comprises a network entity, in particular a network entity as disclosed therein.

It is to be understood that the presentation of the embodiments disclosed herein is merely by way of examples and non-limiting.

Herein, the disclosure of a method step shall also be considered as a disclosure of means for performing the respective method step. Likewise, the disclosure of means for performing a method step shall also be considered as a disclosure of the method step itself.

### BRIEF DESCRIPTION OF THE DRAWINGS

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.
- FIG. 1: is a schematic representation of an example of an uplink multi-static user equipment-based joint communication and sensing system;
- FIG. 2: shows a flow diagram for an example of operations for Orthogonal Frequency Division Multiplexing radar processing;
- FIG. 3: is a block diagram of an exemplary embodiment of a serving base station;
- FIG. 4: is a flow diagram showing an example operation for a serving base station;
- FIG. 5: is a block diagram of an exemplary embodiment of a supporting base station;
- FIG. 6: is a flow diagram showing an example operation for a supporting base station;
- FIG. 7: is a flow diagram showing an example operation for a system with a user equipment, a serving base station and a supporting base station;
- FIG. 8: is a flow diagram showing an example operation for a system with a user equipment, a serving base station and a supporting base station;
- FIG. 9: is a flow diagram showing an example operation for a sensing operation;
- FIG. 10: is a flow diagram showing an example operation for a system with a user equipment, a serving base station and a supporting base station;
- FIG. 11: is a flow diagram showing example operations for a supporting management function;
- FIG. 12: shows a schematic diagram illustrating an example radio environment in which exemplary embodiments of the present disclosure may be performed;
- FIG. 13: shows a schematic diagram illustrating a block diagram of an exemplary embodiment of an apparatus according to the present disclosure;
- FIG. 14: shows a schematic illustration of examples of tangible and non-transitory computer-readable storage media.;
- FIG. 15: shows flow diagram for a method according to the present disclosure.

### DETAILED DESCRIPTON OF THE DRAWINGS

The following description serves to deepen the understanding of the present disclosure and shall be understood to complement and be read together with the description of example embodiments of the present disclosure as provided in the above SUMMARY section of this specification.

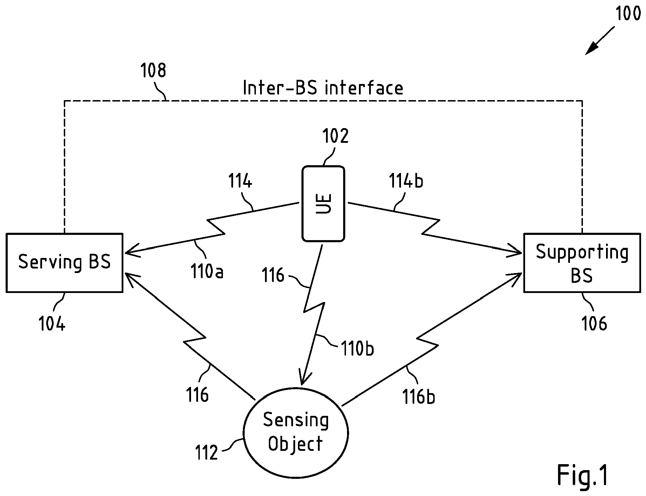

FIG. 1 shows an exemplary system 100 comprising a user equipment 102 (UE), a serving base station 104 (BS) and a supporting base station 106. The serving BS 102 and the supporting BS 106 are connected by a communication connection 108 or inter-BS interface configured for transfer of signals and information. The different aspects of the disclosure may be employed in a scenario as shown in Fig. 1.

In an exemplary operation of the shown system 100, the user equipment 102 emits electromagnetic waves 110a, 110b bearing a signal, wherein the electromagnetic waves 110a, 110b travel across the physical space near the user equipment 102. The signal may be referred to as an uplink transmission comprising pilot information and/or uplink data, wherein uplink data may comprise data symbols and / or information bits. While travelling through the physical space, the uplink transmission may eventually arrive at the serving base station 104 and the supporting base station located at proximity of the user equipment 102. However, the uplink transmission may also encounter one or more other physical object(s), obstacle(s) or element(s) 112 of the physical environment located within or close to the travelling path or range or coverage of the electromagnetic waves 110a, 1 10b. The electromagnetic waves 110a, 110b or uplink transmission may diffract, reflect at or more generally interact with or be affected by one or more the physical element(s) 112 positioned in the trajectory according to physical parameters and characteristics of both the electromagnetic waves 110a, 110b themselves and the one or more physical element(s) 112. Physical properties of the medium through which the electromagnetic waves 110a, 110b travel may also affect the travel of the electromagnetic waves 110a, 1 10b. After deviation or reflection, the electromagnetic waves 110a, 110b bearing the signal or uplink transmission originally emitted by the user equipment 102 travel further until arriving at, for instance, the serving base station 104 and / or the supporting base station.

As a result, the uplink transmission transmitted by the user equipment 102 may be received at the serving BS 104 via a first travel path 114 as a direct uplink transmission by means of the electromagnetic waves 110a, 110b travelling directly to the serving BS 104, that is without being diffracted or reflected on its trajectory from the user equipment 102 to the serving BS 104, and via a second travel path 116 as an indirect uplink transmission, that is as electromagnetic waves 110a, 110b that have been diffracted, reflected by or more generally affected by object(s) 112 on their trajectory between the user equipment 102 and the serving BS 104. In the same manner as just described, that is via a first travel path 114b and a via a second travel path 116b, the uplink transmission transmitted by the user equipment 102 may be received at the supporting BS 106.

In an example, the uplink transmission from the user equipment 102 to the (serving and/or supporting) base station may undergo a line of sight (LOS) propagation. Thus, the direct uplink transmission may be a LOS transmission. In an example, the uplink transmission from the user equipment 102 to the (serving and/or supporting) base station may (also) undergo a non-line of sight (NLOS) propagation. Thus, the indirect uplink transmission may be a non-line of sight transmission. An uplink transmission may also undergo LOS and NLOS propagation at the same time. In an example, an uplink transmission may undergo a multi-path propagation from the user equipment 102 to the base station.

In case there are objects close to the user equipment 102 and/or in or close to the travelling path of a signal between the user equipment 102 and the (serving and/or supporting) base station, properties (such as position, size, geometry or the like) of these objects 112 may be derived from a signal received at the respective base station.

In an example, the UL transmission received at the serving BS 104 is perceived as sum of the uplink transmission received via the first travel path 114 an via the second travel path 116, wherein the first and the second paths 114, 116 are considered together as a "channel". Estimating a channel state information, CSI, allows for obtaining data from the received uplink transmission received via the "channel". Then, one would like to isolate, from the acquired CSI, the components corresponding to the interaction of the UL transmission with eventual sensing object 112.

In an exemplary embodiment, the serving BS 104 and the supporting BS 106 form a system configured for processing the uplink transmission received at the serving BS 104 via a first travel path 114, the uplink transmission received at the supporting BS 106 via a first travel path 114, the uplink transmission received at the serving BS 104 via a second travel path 116 and the uplink transmission received at the supporting BS 106 via a second travel path 116 for joint communication and sensing operation (JCAS).

A corresponding processing operation, and in particular a sensing operation, may comprise using technologies leant to radar technologies in order to enable object detection, recognition and / or classification. For the system 100 shown in FIG. 1, a sensing operation may result in a detection of the physical element 112 due to the physical object reflecting the uplink transmission toward the serving BS 104 and the supporting BS 106.

It should be noted that FIG. 1 shows an uplink transmission being reflected or diffracted by one physical element, but that this representation does not limit the subject matter of the present disclosure to this configuration. In particular, an uplink transmission originally sent by the user equipment 102, or the corresponding electromagnetic waves 110a, 110b emitted by the user equipment 102 may be affected by at least one, possibly a plurality of physical elements 112 or variation of the physical environment of the user equipment 102, which plurality of physical elements 112 may affect the travel or trajectory of the emitted electromagnetic waves 110a, 110b or inter alia of the uplink transmission. In the case of a plurality of physical elements affecting the propagation of an uplink transmission, the serving BS 104 and / or the supporting BS 106 may receive the uplink transmission originally emitted by the user equipment 102 via a plurality of travel paths, wherein the plurality of travel paths may include a path for a direct uplink transmission and a plurality of paths for indirect transmissions.

It may also be considered that the serving BS 104 and / or the supporting BS 106 may receive indirect uplink transmissions and fail to receive a direct uplink transmission, in particular when a physical element 112 is located between the user equipment 102 and the serving BS 104 and / or the supporting BS 106.

Joint communication and sensing operation may be enabled by using uplink transmission, wherein electromagnetic waves 110a, 110b having a Frequency Modulated Continuous Wave (FMCW) waveform are emitted for the aim of the sensing operation part, and wherein said electromagnetic waves 1 10a, 110b having a Frequency Modulated Continuous Wave (FMCW) waveform are multiplexed with electromagnetic waves 110a, 110b aimed for communication operation, which electromagnetic waves 110a, 110b aimed for communication may be configured as known from the state of the art.

Alternatively or additionally, an uplink transmission emitted or sent by the user equipment 102 may conform with orthogonal frequency-division multiplexing (OFDM) radar technology and rely on electromagnetic waves having corresponding waveforms. Current communications standards operate with OFDM, that allows easy equalization of the channel effect (one-tap equalization). In order to access radar functionalities on top of communication, waveforms as prescribed by orthogonal frequency-division multiplexing (OFDM) radar technology are desirable.

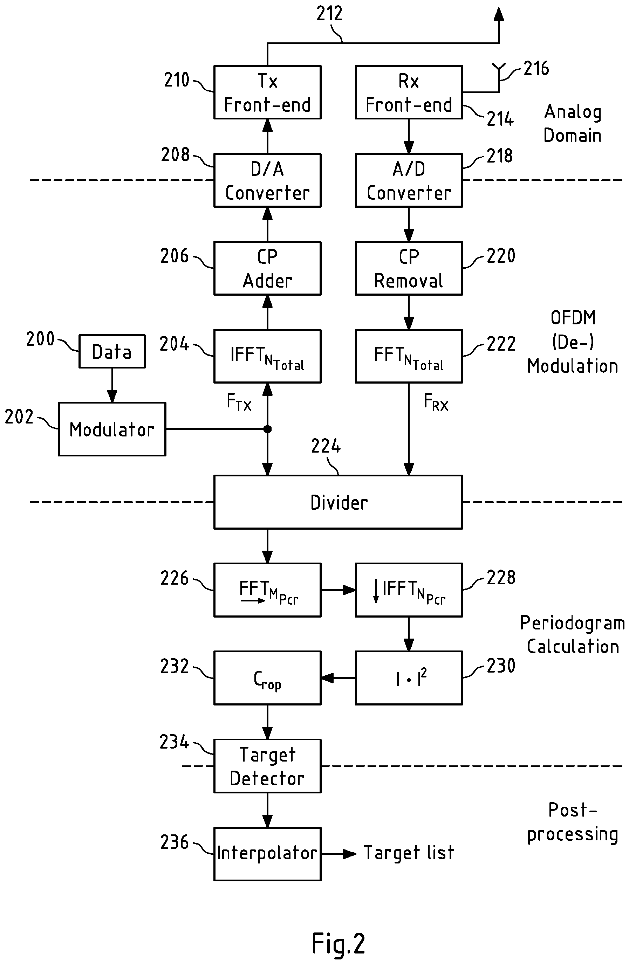

FIG. 2 shows a flow diagram for an example of operations for Orthogonal Frequency Division Multiplexing radar processing in a mobile communication network. The operations as shown may be performed at a receiver end for an uplink transmission. In the context as described with FIG. 1, the operations shown in FIG. 2 may, for instance, be performed at the serving BS and / or at the supporting BS.

Starting from data 200 provided to a modulator 202, an OFDM modulation operation is performed by an inverse Fast Fourier Transform unit 204, a CP adder 206 and a digital to analog, D/A, converter 208, and the resulting output is sent as a signal 212 by a transmitting front-end Tx 210. The signal 212 sent may comprise information on an uplink transmission to be performed by, e.g., a user equipment. As an example, the signal 212 may comprise a scheduling grant for an uplink transmission.

At a receiver front-end Rx 214, a signal 216, e.g. an uplink transmission sent by a user equipment, wherein the uplink transmission conforms with information sent by the front-end Tx 210, e.g. a scheduling grant, is received and forwarded to an A/D converter unit 218, then to a CP removal unit 220 and to a Fast Fourier Transform unit 222, which together are configured for OFDM demodulation operation. After OFDM demodulation operation, the signal is forwarded to a divider unit 224, which retrieves data outputted by the modulator 202. A resource-element-symbol-wise division of the frequency domain received signal 222 by the frequency domain modulation symbols 202 is carried out. The output of the divider unit 224 is then processed with periodogram calculation by means of a Fast Fourier Transform unit 226, an inverse Fast Fourier Transform Unit 228, an unit 230 for calculating a square of the absolute value, |.|², and a crop unit 232. The result of the periodogram calculation operation is forwarded to a target detector 234and an interpolator 236 for post-processing operation.

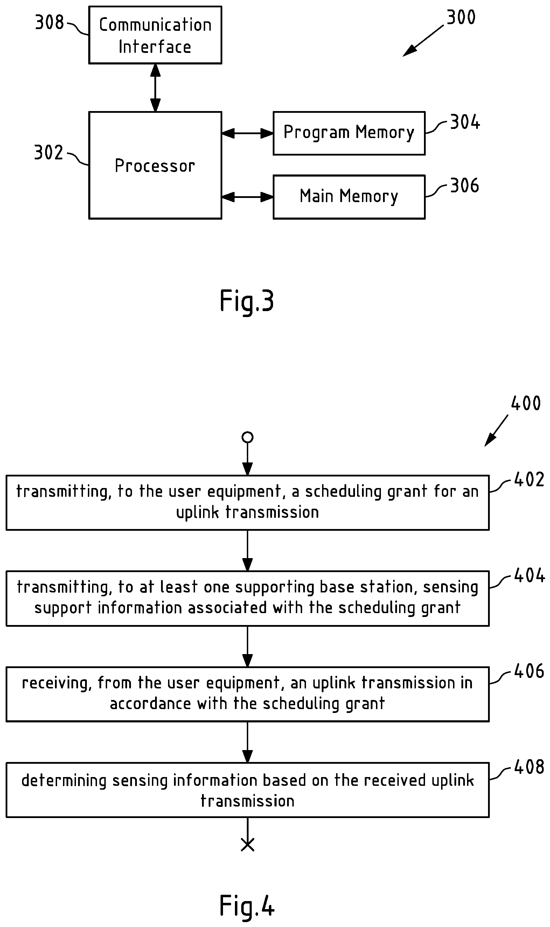

FIG. 3 is a block diagram of an exemplary embodiment of a network entity 300, such as a base station (in particular a non-terrestrial network entity or gNB), in particular a serving base station according to a first aspect of the present disclosure. For instance, network entity 300 may be configured for scheduling and/or transmitting signals to the UE, as described above.

Network entity 300 comprises a processor 302. Processor 302 may represent a single processor or two or more processors, which are for instance at least partially coupled, for instance via a bus. Processor 302 executes a program code stored in program memory 304 (for instance program code causing network entity 300 to perform alone or together with the apparatus 1300 embodiments according to the present disclosure or parts thereof), and interfaces with a main memory 306.

Program memory 304 may also comprise an operating system for processor 302. Some or all of memories 304 and 306 may also be included into processor 302.

Moreover, processor 302 controls a communication interface 308 which is for example configured to communicate according to a cellular communication system like a 2G/3G/4G/5G cellular communication system. Communication interface 308 of apparatus 300 may be realized by radio heads for instance and may be provided for communication between network entity and the apparatus, as described above.

The components 304 to 904 of network entity 300 may for instance be connected with processor 302 by means of one or more serial and/or parallel busses.

It is to be understood that apparatuses 1300, 300 may comprise various other components.

The communication interface 308 is configured for transmitting, to the user equipment, a scheduling grant for an uplink transmission. The communication interface 308 is also configured for transmitting, to at least one supporting base station, sensing support information associated with the scheduling grant, and for receiving, from the user equipment, an uplink transmission in accordance with the scheduling grant.

FIG. 4 is a flow diagram showing an example operation 400 for a serving base station, in particular a method performed by a serving base station, according to an aspect of the present disclosure. Action 402 comprises transmitting, to a user equipment, a scheduling grant for an uplink transmission. Action 404 comprises transmitting, to at least one supporting base station, sensing support information associated with the scheduling grant. Action 406 comprises receiving, from the user equipment, an uplink transmission in accordance with the scheduling grant, and action 408 comprises determining sensing information based on the received uplink transmission.

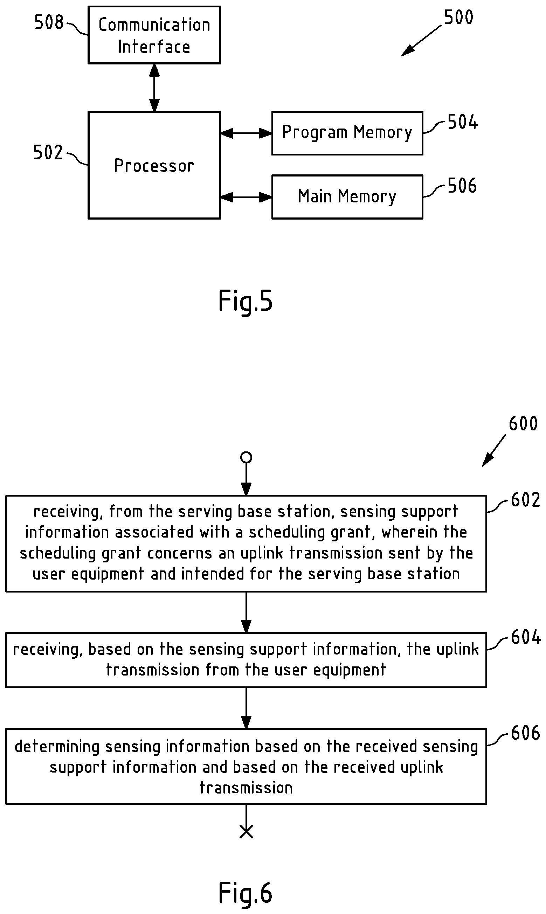

FIG. 5 is a block diagram of an exemplary embodiment of a network entity 500, such as a base station (in particular a non-terrestrial network entity or gNB), in particular a supporting base station according to an aspect of the present disclosure. For instance, network entity 500 may be configured for scheduling and/or transmitting signals to the UE, as described above.

Network entity 500 comprises a processor 502. Processor 502 may represent a single processor or two or more processors, which are for instance at least partially coupled, for instance via a bus. Processor 502 executes a program code stored in program memory 504 (for instance program code causing network entity 500 to perform alone or together with the apparatus 1300 embodiments according to the present disclosure or parts thereof), and interfaces with a main memory 506.

Program memory 504 may also comprise an operating system for processor 502. Some or all of memories 504 and 506 may also be included into processor 502.

Moreover, processor 502 controls a communication interface 508 which is for example configured to communicate according to a cellular communication system like a 2G/3G/4G/5G cellular communication system. Communication interface 508 of apparatus 500 may be realized by radio heads for instance and may be provided for communication between network entity and the apparatus, as described above.

The components 504 to 904 of network entity 500 may for instance be connected with processor 502 by means of one or more serial and/or parallel busses.

It is to be understood that apparatuses 1300, 500 may comprise various other components.

The supporting base station is configured for supporting a serving base station serving a user equipment in a sensing operation. The communication interface 508 is configured for receiving, from the serving base station, sensing support information associated with or related to a scheduling grant, wherein the scheduling grant concerns an uplink transmission sent by the user equipment and intended for the serving base station. The communication interface 508 is further configured for receiving, based on the sensing support information, the uplink transmission from the user equipment.

FIG. 6 is a flow diagram showing an example operation 600 for a supporting base station, in particular a method performed by a serving base station, according to an aspect of the present disclosure. Action 602 comprises receiving, from the serving base station, sensing support information associated with a scheduling grant, wherein the scheduling grant concerns an uplink transmission sent by the user equipment and intended for the serving base station. Action 604 comprises receiving, based on the sensing support information, the uplink transmission from the user equipment. Action 606 comprises determining sensing information based on the received sensing support information and based on the received uplink transmission.

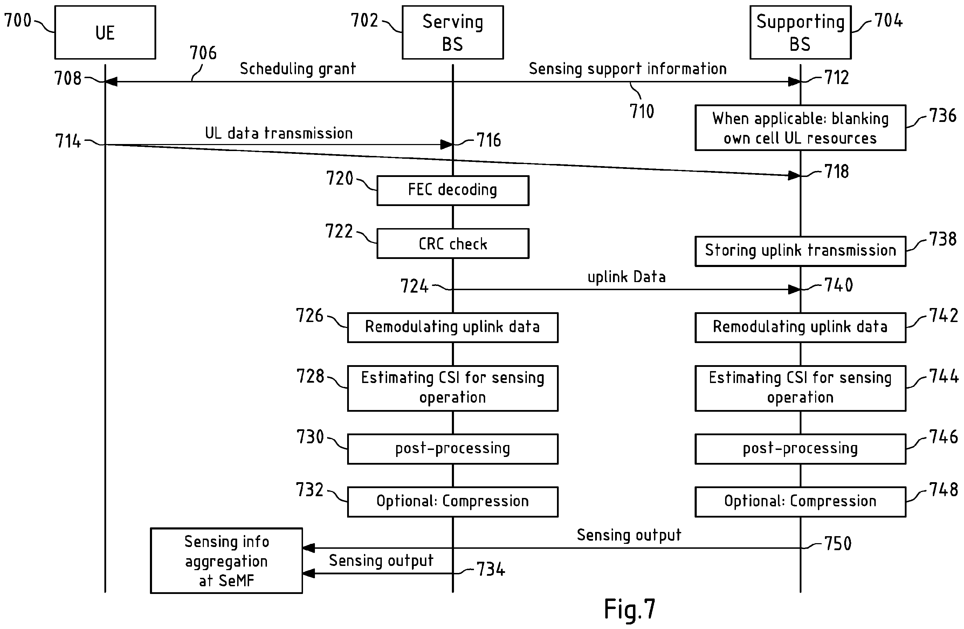

FIG. 7 is a flow diagram showing an example operation for a system with a user equipment 700, a serving base station 702 and a supporting base station 704. It is to be noted that FIG. 7 shows one supporting base station, whereas this representation is not limiting for the scope of the present disclosure. Indeed, a plurality of supporting base stations supporting the serving base station may be provided, wherein the respective supporting base station may be configured for performing the operations described herein with regard to the supporting base station represented in FIG. 7.

A shown in FIG.7, in an action 706, the serving base station transmits, to the user equipment, a scheduling grant for an uplink transmission. In action 710, which may be performed in parallel with or after performing action 706, the serving base station transmits, to the supporting base station, sensing support information associated with the scheduling grant. In action 708, the user equipment receives the scheduling grant transmitted by the serving base station. As a reaction and in an action 714, the user equipment transmits an uplink transmission according to the scheduling grant. The uplink transmission is received at the serving base station (action 716) and at the supporting base station (action 718).

Once the serving base station received, from the user equipment, the uplink transmission in accordance with the scheduling grant, the serving base station processes, in an action 720, the uplink transmission received from the user equipment to obtain uplink data. To do so, the serving base station performs FEC decoding. In a subsequent action 722, the serving base station performs a CRC check. If the CRC check results in an acknowledgment, the serving base station transmits, in an action 724, to the supporting base station, the uplink data. In action 726, the serving base station remodulates the uplink data including re-encoding and re-scrambling, (this holds also for 742). Then, in an action 728, the serving base station determines sensing information based on the received uplink transmission, i.e. on the remodulated uplink data originated from the uplink transmission received from the user equipment. The serving base station then performs, in action 730, post-processing, optionally followed by an action 732 of a data compression. In a subsequent action 734, the serving base station forwards the output of the post-processing operation, or, optionally, of the compression operation, to a further entity. Post-processing may comprise determining a periodogram.

In an action 736, the supporting base station blanks, when possible, own cell uplink resources for reducing interference on the sensing signal. In an action 738, the uplink transmission received from the user equipment (in action 718) is stored. In an action 740, uplink data obtained by the serving station from processing the uplink transmission between the user equipment and the serving base station is received at the supporting from the serving base station. As an example, the supporting base station may store the received uplink transmission on a resource map (RE map). Then, in an action 742, the supporting base station remodulates the uplink data received from the serving base station. Subsequently (action 744), the supporting base station determines sensing information, in particular channel state estimation, based on the sensing-support information received at action 712, on the uplink transmission received at action 718, and on the uplink data received at action 740 from the serving base station. Afterwards and in an action 746, the supporting base station performs a post-processing operation on the sensing information obtained from action 744 and optionally data compression an action 748. Finally, the supporting base station transmits, in an action 750, the output of the post-processing operation of action 746, or, optionally, of the data compression of action 748, to a further entity for later analysis together with the output of the serving base station transmitted to the same entity at action 734. Post-processing may comprise determining a periodogram.

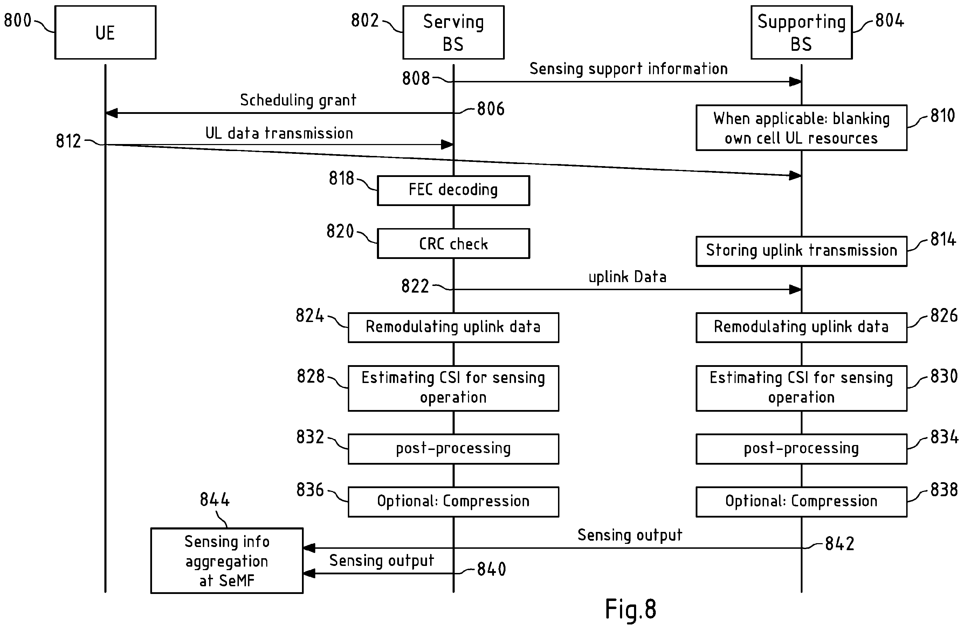

Fig. 8 is a flow diagram showing an example operation for a system with a user equipment 800, a serving base station 802 and a supporting base station 804, which system is configured for performing data-aided multi-static sensing operation. As shown in FIG. 8, the serving BS notifies the UE with an UL scheduling grant (which can be regular, as for communications) in an action 806. Additionally, and prior to the scheduling grant to account for supporting BS signaling and processing delays, the serving BS informs, in an action 808, one or more supporting BS with sensing support information that the support of the supporting base station is requested, along with supporting control information containing resource element map (or PRB map), where the UE data is located in time and frequency; MCS of the data; scrambling information and any other operations which have been carried out such that later remodulation is possible; the UE position (which may be obtained e.g. by radio access based positioning techniques) and/or the relative angle of arrival (AoA) of the supporting BS to the UE. In case of a typical distributed and central unit (DU, CU) split, the sensing support indicator can be sent via the serving base station via F1 interface from DU to CU, then via Xn interface to the supporting cell BS CU and there via F1 to the respective DU. Note that sensing typically relies on line of sight conditions (LoS), such that AoA can simply be geometrically computed based on UE and BS position. Moreover, the necessary information to compute the DMRS used by the UE during the transmission are also shared.

Note that the scheduling grant should be on resources that are enough in the future, to allow to convey the sensing support indicator information to the supporting BSs, allowing them to prepare the reception of the sensing information, if they are interested. In an optional action 810, the supporting BS can blank its own UL resources at the time-frequency positions where it has to assist. This will reduce interference on the sensing signals. Once, in an action 812, the UE UL transmission happens, the supporting BS uses, in an action 814, appropriate spatial processing techniques (preferably multiple beamformers pointed to UE and sensing angles of interest) and stores the respective time-frequency part of the receive signal, as it will likely not be able it to decode it due to worse path loss compared to the serving cell. The serving BS can carry out, in an action 818, FEC decoding and confirm, in an action 820, via successful cyclic redundancy check (CRC) operation that the decoding was correct. The decoded data (information bits) can be signalled, in an action 822, via the F1 + Xn interfaces (as described for the sensing supporting indicator).

The serving base station and the supporting base station may try to perform channel state information estimation for sensing purposes by using the DMRS (if they are known) pilots. If the achieved quality, e.g. in terms of SNR, is not enough, then the base station should resort also to data symbols, allowing to achieve much higher processing gains and raise the SNR.

Accordingly, both serving BS and supporting BS could remodulate including re-encode and re-scramble, in respective action 824 and 826, the UE TX signal with the decoded data (either available locally at the serving BS, or communicated to the supporting BS), such that the resulting orthogonal frequency-division multiplexing (OFDM) resource element symbols can be used as additional pilots / reference symbols for carrying out, in respective action 828 and 830, the channel state information estimation for sensing purpose. The sensing channel estimation may comprise methods for exploiting the direct signal from the UE to be used as carrier- and timing offset (CFO + TFO) correction source, as well as using spatial processing to separate object reflections of interest from the direct path to the UE.

Further postprocessing can be carried out in respective action 832 and 834 to obtain a periodogram via DFT / iDFT operations to represent the signal in the delay-Doppler plane and then extract the targets of interest with e.g. constant false alarm rate (CFAR) methods and clutter removal algorithms. The target extraction alone is already a compression action, in respective actions 836 and 838, of the sensing information, when e.g. only the relevant targets of interests are signalled with delay, Doppler and power. For signalling the resulting outcome, further compression, quantization and source coding techniques can be applied in respective actions 840 and 842.

The sensing information is then, in an action 844, aggregated at a central point which preferably resides in the sensing management function (SeMF).

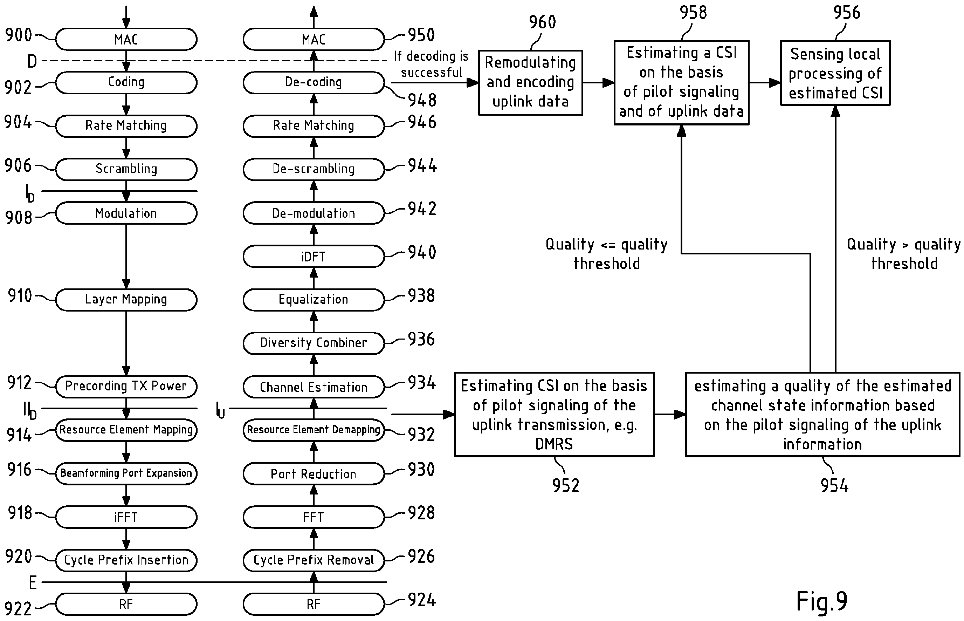

FIG. 9 is a flow diagram showing an example operation for a sensing operation on the basis of a received uplink transmission transmitted by a user equipment according to a scheduling grant. The sensing operation as shown in FIG. 9 may be performed at a serving base station serving a user equipment and / or at at least one supporting base station supporting the serving base station, wherein the at least one supporting base station may be a supporting distributed base station processing elements with split processing functionality, e.g. having a radio unit (RU), distributed unit (DU) and central unit (CU) with different split options. The following actions may be performed one after another, wherein individual actions may be omitted or repeated, when necessary: MAC 900, coding 902, rate matching 904, scrambling 906, modulation 908, layer mapping 910, precoding transmission power 912, resource element mapping 914, optionally beam forming port expansion 916, inverse Fast Fourier transform 918, cyclic prefix insertion 920, RF 922; RF 924, cyclic prefix removal 926, Fast Fourier Transform 928, optionally port reduction 930, resource element demapping 932, channel estimation 934, diversity combiner 936, equalization 938, inverse discrete Fourier Transform 940, demodulation 942, de-scrambling 944, rate matching 946, de-coding 948, MAC 950.

After resource element de-mapping 932, a channel state information may be estimated on the basis of a demodulation reference signal (DMRS) in action 952. When the CSI estimation operation is performed by a serving base station, the demodulation reference signal may be known from a scheduling grant sent to the user equipment from which the uplink transmission processed in the CSI estimation operation originates. When the CSI estimation operation is performed by a supporting base station, the demodulation reference signal may be received by the supporting base station as sensing support information associated with the scheduling grant, which sensing support information is provided by a serving base station.

A subsequent action 954 comprises estimating a quality of the estimated channel state information based on the pilot signaling of the uplink transmission and comparing the estimated quality to a threshold quality. In particular, the quality may be estimated as a signal-to-noise ratio. If the comparison results in that the estimated quality is higher than the threshold quality, the estimated CSI is further processed, in an action 956, for extraction of sensing information. Action 956 may be performed at least in part locally at a base station, at a serving base station, at a supporting base station, at a user equipment, at a sensing management function, or in a central manner at a base station, at a serving base station, at a supporting base station, at a user equipment, at a sensing management function.

If the comparison results in that the estimated quality is equal or lower than the threshold quality, a further estimation of channel state information is performed in an action 958, based on pilot signalling and uplink data of the uplink transmission obtained from the decoding operation mentioned above, which uplink data has undergone remodulation and encoding (action 960) which also includes re-doing of scrambling for the purpose of the further CSI estimation in action 958. The output of CSI estimation is then considered for processing as in action 956.

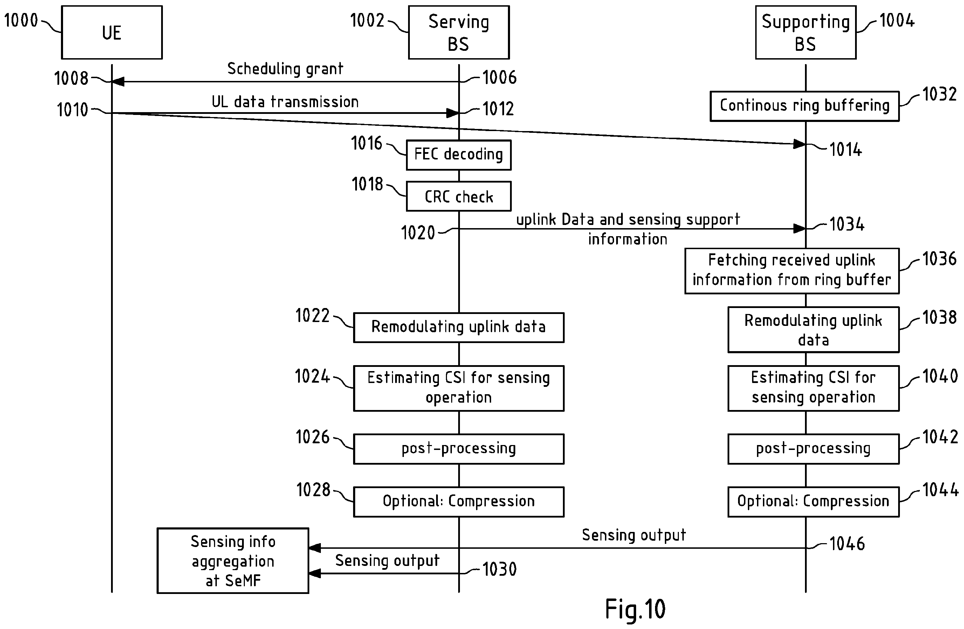

FIG. 10 is a flow diagram showing an example operation for a system with a user equipment 1000, a serving base station 1002 and a supporting base station 1004. It is to be noted that FIG. 10 shows one supporting base station, whereas this representation is not limiting for the scope of the present disclosure. Indeed, a plurality of supporting base stations supporting the serving base station may be provided, wherein the respective supporting base station may be configured for performing the operations described herein with regard to the supporting base station represented in FIG. 10.

In an action 1006, the serving base station transmits, to the user equipment, a scheduling grant for an uplink transmission. In action 1008, the user equipment receives the scheduling grant transmitted by the serving base station. As a reaction and in an action 1010, the user equipment transmits an uplink transmission according to the scheduling grant. The uplink transmission is received at the serving base station (action 1012) and at the supporting base station (action 1014). Once the serving base station received, from the user equipment, the uplink transmission in accordance with the scheduling grant, the serving base station processes, in an action 1016, the uplink transmission received from the user equipment to obtain uplink data. To do so, the serving base station performs forward error correction, FEC, decoding. In a subsequent action 1018, the serving base station performs a cyclic redundancy check, CRC. If the CRC results in an acknowledgment, the serving base station transmits, in an action 1020, to the supporting base station, the uplink data and sensing support information associated with the scheduling grant.

In action 1022, the serving base station remodulates the uplink data which may include re-encoding and re-scrambling. Then, in an action 1024, the serving base station determines sensing information based on the received uplink transmission, i.e. on the remodulated uplink data originated from the uplink transmission received from the user equipment. The serving base station then performs, in action 1026, post-processing, optionally followed by an action 1028 of a data compression. In a subsequent action 1030, the serving base station forwards the output of the post-processing operation, or, optionally, of the compression operation, to a further entity or function in the telecommunication network, e.g. a management function, in particular a sensing management function.

In parallel to actions 1006 to 1014 , the supporting base station stores, in an action 1032, signals and transmissions received in a ring buffer memory unit, in particular performs continuous ring buffering. In an action 1014, the supporting base station receives, from the user equipment, the uplink transmission and stores the received uplink transmission in the ring buffer memory unit. In a subsequent action 1034, the supporting base station receives, from the serving base station, uplink data obtained by the serving station from processing the uplink transmission between the user equipment and the serving base station and sensing support information associated with the scheduling grant. The sensing support information may comprise supporting control information as described with regard to FIG. 8.

In an action 1036, the supporting base station retrieves or fetches, in the ring buffer and in accordance with the sensing support information received from the serving base station, the uplink transmission received in action 1014 from the user equipment. Accordingly, a supporting base station performing operation as shown in FIG. 10 comprises means for continuously buffering received uplink transmissions in a ring buffer memory, wherein the continuous buffering comprises buffering the uplink transmission received from the user equipment; and fetching, based on the sensing support in formation, the uplink transmission received from the user equipment from the ring buffer memory.

Then, in an action 1038, the supporting base station remodulates the uplink data received from the serving base station. Subsequently (action 1040), the supporting base station determines sensing information, in particular channel state estimation, based on the sensing-support information received in action 1032, on the uplink transmission received in action 1014, and on the uplink data received in 1032 from the serving base station. Afterwards and in an action 1042, the supporting base station performs a post-processing operation on the sensing information obtained from action 1034 and optionally data compression an action 1044. If the buffer is per-antenna port, also the spatial domain RX processing can be carried out as variable post-processing.

Finally, the supporting base station transmits, in an action 1046, the output of the post-processing operation of action 1042, or, optionally, of the data compression of action 1044, to a further entity for later analysis together with the output of the serving base station transmitted to the same entity in action 1030.

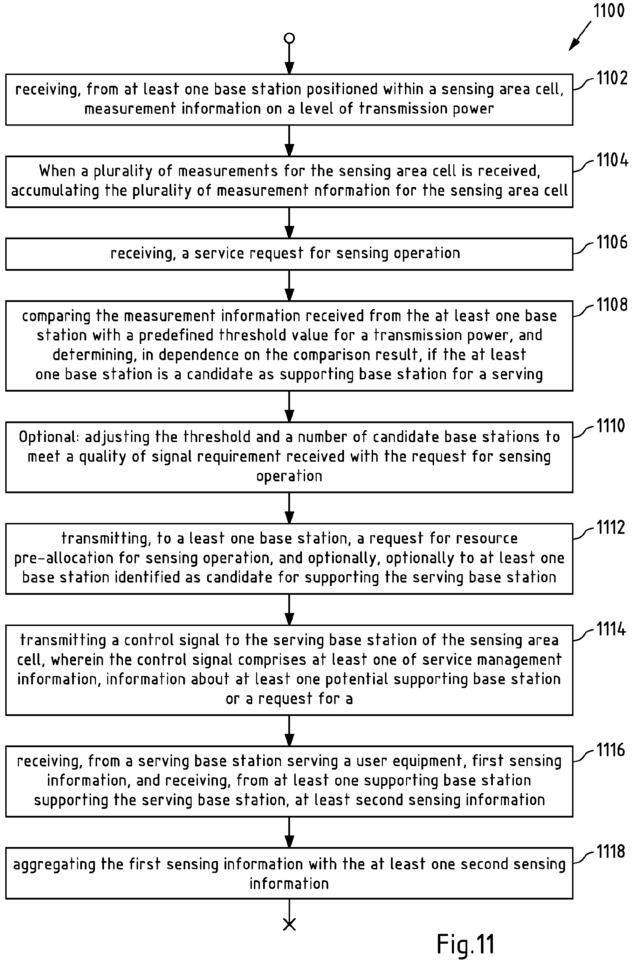

FIG. 11 is a flow diagram showing operations for a sensing management function (SeMF) 1100.

In an action 1102, the sensing management function receives, from at least one base station positioned within a sensing area cell, measurement information on a level of received signal power. Additionally or as an alternative to measurement information on a level of received signal power, other information can be used at the SeMF to determine supporting base stations, e.g. a location of the at least one base station, an orientation of the at least one base station relative to each other, thus their covered area.

In the case of measurement information on a level of received signal power, the measurement information may be user equipment handover measurement, e.g. RSSI. The base station may be positioned or located within a sensing area cell of interest, wherein the sensing area cell of interest may be a cell area defined based on user equipment position information obtained by, e.g., 5G or 6G RAT-based positioning operation. The measurement information may comprise information on or corresponding to a received signal strength indicator (RSSI), from which RSSI path loss information may be derived. In the event the sensing management function receives a plurality of measurements for the sensing area cell, the sensing management function accumulates the plurality of measurement information for the sensing area cell (optional action 1104).

In an action 1106, the sensing management function receives a service request for sensing operation, wherein the service request for sensing operation may comprise quality of signal (QoS) and / or information on resource allocation requirement for sensing operation. The sensing management function may receive the service request for sensing operation from a user equipment, a base station, a serving base station, a supporting base station, an entity of the telecommunication network, from the telecommunication network, from a further function of the network.

In an action 1108, the sensing management function compares the measurement information received from the at least one base station with a predefined threshold value for a received signal power. The sensing management function may then determine, in dependence on the comparison result, if the at least one base station is a candidate as supporting base station for a serving base station serving a user equipment located within the sensing area cell. When the sensing management function compares a plurality of received measurement information, the sensing management function may determine, based on the result of the comparison with the threshold value for received signal power, a list with at least one base station that is determined as candidate for supporting serving base station located in the sensing area cell. Determining if the at least one base station is a candidate as supporting base station may be additionally based on information from the service request for sensing operation, e.g. quality of signal (QoS) and / or information on resource allocation requirement.

The threshold may be chosen in relation with a received signal strength indicator (RSSI) of the area cell of interest. The threshold and a number of candidate base stations may be adjusted, by the sensing management function in an optional action 1110, to meet a quality of signal requirement received with the request for sensing operation. As an example, a number of candidate base stations can be increases for increasing sensing position estimation accuracy. Action 1110 may be performed directly subsequent to action 1106 or at a later operation stage.

As an option, the sensing management function may, in an action 1112, transmit, to a least one base station, a request for resource pre-allocation for sensing operation. The request for resource pre-allocation may comprise information on time-frequency density requirement. The request for resource pre-allocation may be sent, from the sensing management function to the serving base station, and optionally to at least one base station identified as candidate for supporting the serving base station.

In an action 1114, the sensing management function transmits a control signal to the serving base station of the sensing area cell, wherein the control signal comprises at least one of sensing management information, information about at least one potential supporting base station or a request for a resource pre-allocation for sensing operation. In particular, sensing management function may transit information on the at least one base station which is determined as candidate as supporting base station to the serving based station serving the user equipment located within the sensing area cell.

At a later stage and in an action 1116, the sensing management function may receive, from a serving base station serving a user equipment, first sensing information, and receive, from at least one supporting base station supporting the serving base station, at least second sensing information. The sensing management function may aggregate, in an action 1118, the first sensing information with the at least one second sensing information. The sensing management function may then process the aggregated sensing information for extracting information on the physical environment of the user equipment located in the area cell of interest.

A sensing management function configured for performing the operation as shown in FIG.11 may comprise at least one element of the following: means for: receiving, from at least one base station positioned within a sensing area cell, measurement information on a level of received signal power, comparing the measurement information received from the at least one base station with a predefined threshold value for a received signal power, determine, in dependence on the comparison result, if the at least one base station is a candidate as supporting base station for a serving base station serving a user equipment located within the sensing area cell, if the at least one base station is determined as candidate as supporting base station, transmitting information on the at least one base station which is determined as candidate as supporting base station to the serving based station serving the user equipment located within the sensing area cell; means for receiving, from a serving base station serving a user equipment, first sensing information, and receiving, from at least one supporting base station supporting the serving base station, at least second sensing information, aggregating the first sensing information with the at least one second sensing information; or means for: transmitting, to at least one of the serving base station or the at least one supporting base station, a request for resource pre-allocation for a data aided sensing operation.

The sensing management function may be arranged at a base station, in particular at the base located in the sensing area cell, or at a server. The sensing management function may be provided as a computer program on a memory, which computer program, when executed on a processor, causes an apparatus to perform at least one of the following: receiving, from at least one base station positioned within a sensing area cell, measurement information on a level of received signal power, comparing the measurement information received from the at least one base station with a predefined threshold value for a received signal power, determine, in dependence on the comparison result, if the at least one base station is a candidate as supporting base station for a serving base station serving a user equipment located within the sensing area cell, if the at least one base station is determined as candidate as supporting base station, transmitting information on the at least one base station which is determined as candidate as supporting base station to the serving based station serving the user equipment located within the sensing area cell; receiving, from a serving base station serving a user equipment, first sensing information, and receiving, from at least one supporting base station supporting the serving base station, at least second sensing information, aggregating the first sensing information with the at least one second sensing information; or transmitting, to at least one of the serving base station or the at least one supporting base station, a request for resource pre-allocation for a data aided sensing operation.

The sensing management function, the serving base station, the user equipment and the at least one supporting base station may be comprised in a cellular network system for telecommunication.

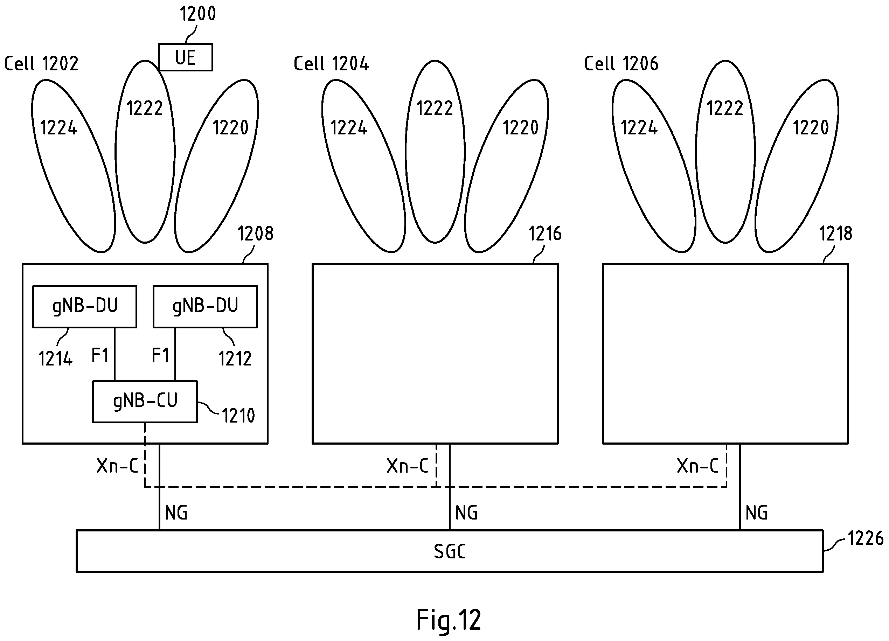

As shown in FIG. 12, a user equipment (UE) 1200, as an example of a user equipment of the exemplary aspects of the present disclosure, is connected to a cell 1 of a network entity or base station, a gNB 1208 via a communication beam of the cell 1. In the example shown in FIG. 12, the gNB 1208 is provided with a CU 1210 and two DUs 1212 and 1214 being connected to the CU 1210 by a F1 interface. The DUs 1212 and 1214 may have a further distributed realization with an RU connected via fronthaul. Furthermore, as shown in the example of FIG. 12, there is a plurality of further cells to which the first UE 1200 can connect. Naturally, in each cell, a plurality of UEs may be present and connected to the respective cell. Similarly to cell 1202, cells 1204 and 1206 are controlled by gNB 1216 and 1218, respectively, and each provides a plurality of beams 1220, 1222, 1224, which may be used for beam diversity or beam hopping. As shown in FIG. 12, each base station or gNB of the cells is connected to a core network 1226, such as a 5GC, via respective interfaces, indicated as NG interfaces. Furthermore, each gNB of the cells is connected with each other by means of a specific interface, which is referred to e.g. as an Xn-C interface. Any of these network entities, such as the gNB, gNB-DU, gNB-CU and/or 5GC, may individually or together be an example of a base station or a part thereof according to the present disclosure.

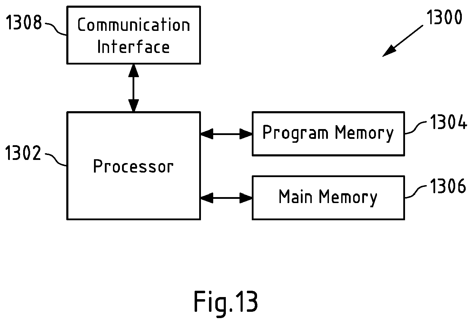

Turning now to Fig. 13, there is shown a block diagram of an exemplary embodiment of an apparatus or UE 1300 according to the present disclosure. For example, UE 1300 may be one of a smartphone, a tablet computer, a notebook computer, a smart watch, a smart band, an LPWAN device, an IoT device, an eMTC device or a vehicle or a part thereof.

UE 1300 comprises a processor 1302. Processor 1302 may represent a single processor or two or more processors, which are for instance at least partially coupled, for instance via a bus. Processor 1302 executes a program code stored in program memory 1304 (for instance program code causing mobile device 1300 in connection with a network entity or base station) to perform one or more of the embodiments of a method according to the present disclosure or parts thereof, when executed on processor 1302, and interfaces with a main memory 1306. Program memory 1304 may also contain an operating system for processor 1302. Some or all of memories 1304 and 1306 may also be included into processor 1302.

One of or both of a main memory and a program memory of a processor (e.g. program memory 1304 and main memory 1306) could be fixedly connected to the processor (e.g. processor 1302) or at least partially removable from the processor, for instance in the form of a memory card or stick.

A program memory (e.g. program memory 1304) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 1306) may for instance be a volatile memory. It may for instance be a DRAM memory, to give non-limiting example. It may for instance be used as a working memory for processor 1302 when executing an operating system, an application, a program, and/or the like.

Processor 1302 further controls a communication interface 1308 (e.g. radio interface) configured to receive and/or transmit data and/or information. For instance, communication interface 1308 may be configured to transmit and/or receive radio signals from a radio node, such as a base station, in particular as described herein. Communication interface 1308 may in particular be configured for communication with an NTN and with a GNSS. However, it may not be possible to operate communication interface for communication with the NTN and with the GNSS at the same time. It is to be understood that any computer program code based processing required for receiving and/or evaluating radio signals may be stored in an own memory of communication interface 1308 and executed by an own processor of communication interface 1308 and/or it may be stored for example in memory 1306 and executed for example by processor 1302.

Additionally, the communication interface 1308 may further comprise a BLE and/or Bluetooth radio interface including a BLE transmitter, receiver or transceiver. For example, radio interface 1308 may additionally or alternatively comprise a WLAN radio interface including at least a WLAN transmitter, receiver or transceiver.

The components 1304 to 1308 of terminal device 1300 may for instance be connected with processor 1302 by means of one or more serial and/or parallel busses.

It is to be understood that terminal device 1300 may comprise various other components. For example, terminal device 1300 may optionally comprise a user interface (e.g. a touch-sensitive display, a keyboard, a touchpad, a display, etc.).

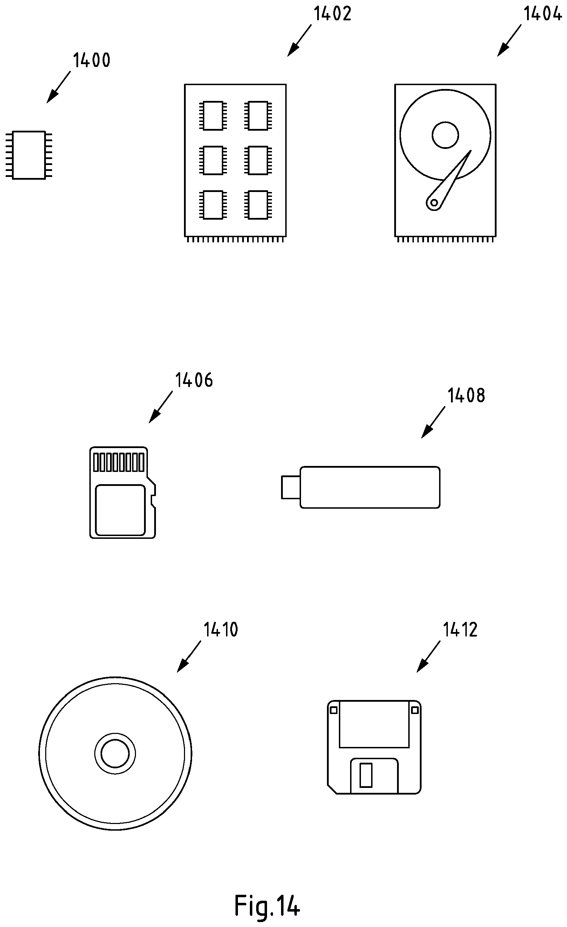

FIG. 14 is a schematic illustration of examples of tangible and non-transitory computer-readable storage media according to the present disclosure that may for instance be used to implement memory 34, 504 of Fig. 3 or 5 or memory 1304 of FIG. 13. To this end, FIG. 14 displays a flash memory 1400, which may for instance be soldered or bonded to a printed circuit board, a solid-state drive 1402 comprising a plurality of memory chips (e.g. Flash memory chips), a magnetic hard drive 1404, a Secure Digital (SD) card 1406, a Universal Serial Bus (USB) memory stick 1408, an optical storage medium 1410 (such as for instance a CD-ROM or DVD) and a magnetic storage medium 1412.

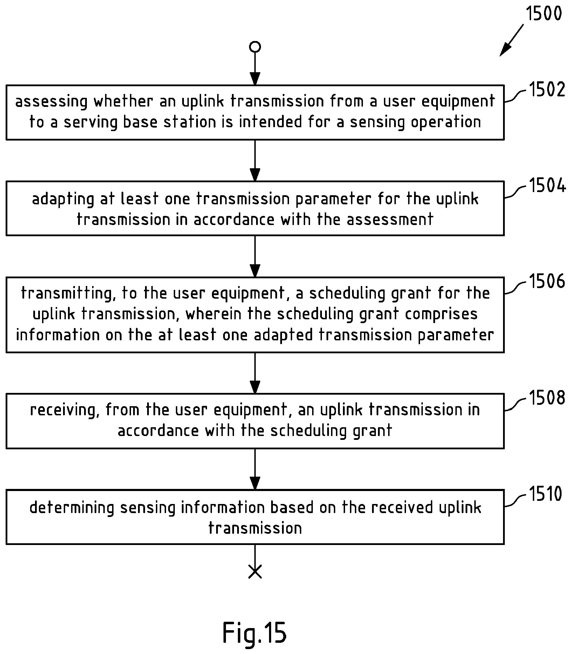

FIG. 15 shows a flow diagram for a method 1500 according to the present disclosure. Action 1502 comprises assessing whether an uplink transmission from a user equipment to a serving base station is intended for a sensing operation. Action 1504 comprises adapting at least one transmission parameter for the uplink transmission in accordance with the assessment. Action 15006 comprises transmitting, to the user equipment, a scheduling grant for the uplink transmission, wherein the scheduling grant comprises information on the at least one adapted transmission parameter. Action 15008 comprises receiving, from the user equipment, an uplink transmission in accordance with the scheduling grant; and action 1510 comprises determining sensing information based on the received uplink transmission. The method may be performed by a serving base station serving the user equipment.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 302, 502 of Figs. 3 and 5 or 1302 of Fig. 13, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or actions described or illustrated herein may be implemented using executable instructions in a general-purpose or special-purpose processor and stored on a computer-readable storage medium (e.g., disk, memory, or the like) to be executed by such a processor. References to `computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to `computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. An apparatus (1300) comprising means (1302) for:
- assessing whether an uplink transmission from a user equipment to a serving base station is intended for a sensing operation,
- adapting at least one transmission parameter for the uplink transmission in accordance with the assessment.

2. The apparatus (1300) of claim 1, wherein the at least one transmission parameter is or pertains to one or more of:
- a frequency allocation,
- modulation order, MO,
- a code rate,
- a modulation and coding scheme, MCS,
- cyclic prefix, CP, length.

3. The apparatus (1300) of anyone of the preceding claims, wherein the at least one transmission parameter pertains to a frequency allocation and wherein adapting at least one transmission parameter for the uplink transmission in accordance with an assessment that the uplink transmission is intended for a sensing operation comprises one or more of:
- increasing the bandwidth for the uplink transmission;
- prioritizing an allocation of higher bandwidths for the uplink transmission;
- using a bandwidth for the uplink transmission according to or higher than a predefined bandwidth; or
- using a bandwidth for the uplink transmission higher than a bandwidth that would be used for an uplink transmission assessed as not being intended for a sensing operation.

4. The apparatus (1300) of claim 3, wherein the bandwidth for the uplink transmission is increased by one or more of
- a reduction of the modulation order and/or coding scheme so that more frequency resources are occupied by the uplink transmission;
- using minislots for the uplink transmission so as to concentrate the uplink transmission of individual user equipment on less time symbols and occupying more frequency resources;
- aggregating transmissions among multiple carriers; or
- making use of multiple uplink allocations for multiple user equipments.

5. The apparatus (1300) of anyone of the preceding claims, wherein the at least one transmission parameter pertains to a modulation order and wherein adapting at least one transmission parameter for the uplink transmission in accordance with an assessment that the uplink transmission is intended for a sensing operation comprises one or more of:
- decreasing a modulation order for the uplink transmission;
- prioritizing a lower modulation order for the uplink transmission;
- setting a modulation order for the uplink transmission to or lower than a predefined modulation order; or
- setting a modulation order for the uplink transmission to a lower modulation order than a modulation order that would be set for an uplink transmission assessed as not being intended for a sensing operation.

6. The apparatus (1300) of anyone of the preceding claims, wherein the at least one transmission parameter pertains to a cyclic prefix length and wherein adapting at least one transmission parameter for the uplink transmission in accordance with an assessment that the uplink transmission is intended for a sensing operation comprises one or more of:
- increasing a cyclic prefix length for the uplink transmission;
- prioritizing a longer cyclic prefix for the uplink transmission;
- setting a cyclic prefix length for the uplink transmission to or higher than a predefined cyclic prefix length; or
- setting a cyclic prefix length for the uplink transmission to a longer cyclic prefix than a cyclic prefix length that would be set for an uplink transmission assessed as not being intended for a sensing operation.

7. The apparatus (1300) of anyone of the preceding claims, further comprising means (1302) for:
- transmitting, to the user equipment, a scheduling grant for the uplink transmission, wherein the scheduling grant comprises information on the at least one adapted transmission parameter.

8. The apparatus (1300) of claim 7, further comprising means (1302) for:
- receiving, from the user equipment, an uplink transmission in accordance with the scheduling grant;
- determining sensing information based on the received uplink transmission.

9. The apparatus (1300) of claim 7 or 8, further comprising (1302) means for:
- transmitting, to at least one supporting base station, sensing support information associated with the scheduling grant.

10. The apparatus (1300) of claim 9, wherein the sensing support information comprises at least one of:
- a resource element, RE, map of the uplink transmission;
- physical resource block, PRB, map of the uplink transmission;
- information on a demodulation reference signal, DMRS, of the uplink transmission;
- information on a modulation and coding scheme, MCS, of the uplink transmission;
- information on a position of the user equipment;
- a relative angle of arrival, AoA, of the uplink transmission.

11. A method (1500) comprising:
- assessing (1502) whether an uplink transmission from a user equipment to a serving base station is intended for a sensing operation,
- adapting (1504) at least one transmission parameter for the uplink transmission in accordance with the assessment.

12. The method (1500) of claim 11, wherein the at least one transmission parameter is or pertains to one or more of:
- a frequency allocation,
- modulation order, MO,
- a code rate,
- a modulation and coding scheme, MCS,
- cyclic prefix, CP, length.

13. The method (1500) of claim 11 or 12, wherein the at least one transmission parameter pertains to a frequency allocation and wherein adapting at least one transmission parameter for the uplink transmission in accordance with an assessment that the uplink transmission is intended for a sensing operation comprises one or more of:
- increasing the bandwidth for the uplink transmission;
- prioritizing an allocation of higher bandwidths for the uplink transmission;
- using a bandwidth for the uplink transmission according to or higher than a predefined bandwidth; or
- using a bandwidth for the uplink transmission higher than a bandwidth that would be used for an uplink transmission assessed as not being intended for a sensing operation.

14. The method (1500) of claim 13, wherein the bandwidth for the uplink transmission is increased by one or more of
- a reduction of the modulation order and/or coding scheme so that more frequency resources are occupied by the uplink transmission;
- using minislots for the uplink transmission so as to concentrate the uplink transmission on less time symbols and occupying more frequency resources;
- aggregating transmissions among multiple carriers; or
- making use of multiple uplink allocations for multiple user equipments.

15. A system (100) comprising a user equipment (102) and a serving base station (104), wherein the serving base station(104) is configured for performing a method (1500) according to any one of claims 11 to 14.
